# EUROPEAN PATENT APPLICATION

(11) **EP 1 681 820 A1**
(43) Date of publication of application: **19.07.2006**
(21) Application number: 04792921.1
(22) Date of filing: 25.10.2004
(51) Int. Cl.: H04L 27/00, H01B 7/26, H04B 7/005

(54) **RADIO COMMUNICATION APPARATUS AND MCS DECIDING METHOD**

(30) Priority: 07.11.2003 JP 2003378552
(71) Applicant: MATSUSHITA ELECTRIC INDUSTRIAL CO., LTD., Kadoma-shi, Osaka 571-8501 (JP)
(72) Inventor: LI, Jifeng, Masushita Electric Ind. Co.;Ltd., Chuo-ku, Osaka 540-06319 (JP)
(74) Representative: Grünecker, Kinkeldey, Stockmair & Schwanhäusser Anwaltssozietät
(86) International application number: PCT/JP2004/015790
(87) International publication number: WO 2005/046152

(57) **Abstract**

A radio communication apparatus is disclosed that is capable of improving throughput even when accuracy of channel quality estimation is low and variation of channel quality estimation values is substantial. In this apparatus, MCS (SIR) acquisition section (201) acquires from MCS table (202) an MCS level (MCS(SIR)) corresponding to an SIR value. Comparison section (204) compares the acquiredMCS level with the MCS level (MCS (p)) used in pervious control and stored in MCS(p) storage section (203). MCS determination section (205) determines an MCS level that has a predetermined level difference with respect the MCS (p) based on the comparison result. MCS determination section (205) acquires the modulation scheme and coding rate corresponding to the determined MCS level from MCS table (202) and controls rate matching section (103) and modulation section (105) .

## Description

### Technical Field

The present invention relates to a radio communication apparatus and MCS determination method performing AMC (Adaptive Modulation and Channel Coding) control.

### Background Art

Conventionally, as disclosed in Patent Document 1, it is well known that a modulation scheme is adaptively determined according to propagation path condition and communication is performed using the determined modulation scheme.

In the filed of radio communication, high speed downlink packet transmission scheme has been developed whereby a number of communication terminal apparatus share a high-speed and large-capacity downlink channel and packets are transmitted from a base station apparatus to the communication terminal apparatus. Non-Patent Document 1 describes adaptive modulation and demodulation, error correction coding and throughput characteristic of hybrid ARQ in this high speed downlink packet transmission scheme, HSDPA (High Speed Downlink Packet Access).

Application of AMC technology that adaptively controls a modulation scheme and coding rate of error correction code according to propagation path condition and hybridARQ (Automatic Repeat Request) technology that performs effective retransmission combined with error correction code, and, furthermore, scheduling technology that switches users to be transmitted data according to propagation path condition in HSDPA for improved information transmission speed, has been studied.

As propagation environment becomes better, AMC improves transmission rate by applying high-speed modulation schemes and error correction codes of high coding rates. Specifically, a communication terminal apparatus estimates propagation path condition of downlink channel per frame and reports estimation results to the base station apparatus . The base station apparatus determines an optimal modulation scheme and coding rate based on these estimation results and transmits packets. The combination of a modulation scheme and coding rate is referred to as an MCS (Modulation and Coding Scheme) . MCS's are assigned levels. That is, the combination of a modulation scheme of a low M-ary value and low coding rate has a low MCS level and the combination of a modulation scheme of a high M-ary value and high coding rate has a high MCS level. Modulation schemes used in MCS's include, for example, four types, namely QPSK, 8PSK, 16QAM and 64QAM, and coding rates are, for example, between 1/3 and 1, using rate matching.

In AMC, throughput characteristic is influenced by determination of MCS levels, determination method thereof and accuracy of channel quality estimation.
Patent Document 1 : Japanese Patent Application Laid-Open No.HEI7-250116
Non-PatentDocumentl:T.Asai,K.Higuchi,and M.Sawahashi "Experimental Evaluations on Throughput Performance of Adaptive Modulation and Channel Coding and Hybrid ARQ in HSDPA", TECHNICAL REPORT OF IEICE RCS2002-178(2002-10).

### Disclosure of the Invention

### Problems to be Solved by the Invention

However, when accuracy of channel quality estimation at a communication terminal apparatus is low, actual channel quality is not reflected, and it is not possible to select an optimal MCS and improve throughput. In particular, when variation of channel quality estimation values is large due to low accuracy of channel quality estimation, MCS levels to be selected fluctuate widely. For this reason, control delay occurs when the base station apparatus receives an estimation result of channel quality from the communication terminal apparatus and then determines MCS, and therefore, it is not possible to reflect the actual channel quality. Consequently, it is not possible to select an optimal MCS according to channel quality and improve throughput.

It is an object of the present invention to provide a radio communication apparatus and MCS determination method improving throughput even when accuracy of channel quality estimation is low and variation of channel quality estimation value is large.

### Means for Solving the Problem

A radio communication apparatus of the present invention employs a configuration having: a coding section that codes transmission data at a changeable coding rate; a modulation section that performs modulation using one of modulation scheme out of a number of modulation schemes; and a control section that tentatively determines an MCS level in accordance with channel quality, compares the tentatively determined MCS level with an MCS level used in previous control, determines the tentatively determined MCS level when a level difference is within the predetermined fluctuation range, determines an MCS level having a level difference with respect to the MCS level used in previous control limited within the fluctuation range when the level difference exceeds the fluctuation range, and controls the coding section and the modulation section so as to have the determined MCS level.

According to this configuration, when the level difference between a tentatively determined MCS level and the MCS level used in previous control is within a predetermined fluctuation range, the tentatively determined MCS is determined, and, when the level difference exceeds the predetermined fluctuation range, an MCS level having a level difference with respect to the MCS level used in previous control within the predetermined fluctuation range is determined, so that fluctuation of MCS level can be reduced, and, consequently, even when accuracy of channel quality estimation is low and variation of channel quality estimation values is large, MCS' s are used in accordance with actual channel quality, and throughput can be improved. In addition, the MCS level is determined fast so that control delay can be reduced.

### Advantageous Effect of the Invention

According to the present invention, when the level difference between a tentatively determined MCS level and the MCS level used in previous control is within a predetermined fluctuation range, the tentatively determined MCS is determined, and, when the level difference exceeds the predetermined fluctuation range, an MCS level is determined having a level difference with respect to the MCS level used in previous control limited within the fluctuation range, so that fluctuation of MCS level can be reduced, and consequently, even when accuracy of channel quality estimation is low and variation of channel quality estimation values is large, MCS's are used in accordance with actual channel quality and throughput can be improved.

### Brief Description of Drawings

FIG.1 is a block diagram showing the configuration of a radio communication apparatus according to Embodiment 1 of the present invention;
FIG.2 is a block diagram showing the internal configuration of the MCS control section according to Embodiment 1 of the present invention;
FIG.3 shows the MCS table according to Embodiment 1 of the present invention;
FIG.4 is a flow chart showing the order of determination MCS;
FIG.5 shows the simulation result using the MCS determination method; and
FIG.6 is a block diagram showing the configuration of the transmission apparatus according to Embodiment 2 of the present invention.

### Best Mode for Carrying Out the Invention

Embodiments of the present invention will be explained below in detail with reference to the accompanying drawings.

### (Embodiment 1)

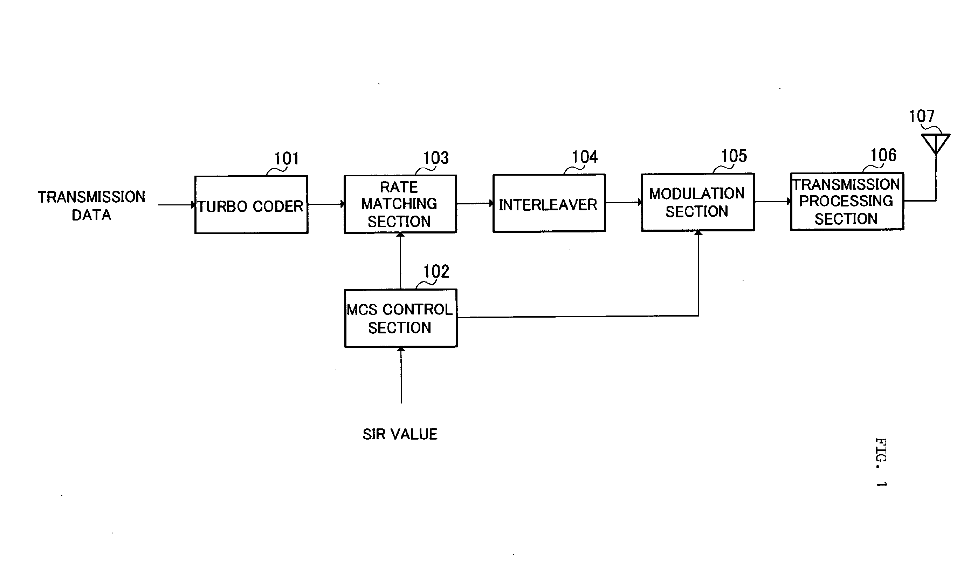

FIG.1 is a block diagram showing the configuration of the radio communication apparatus according to Embodiment 1 of the present invention. In this figure, turbo coder 101 performs turbo coding on transmission data and outputs a coded signal to rate matching section 103.

MCS control section 102 determines an MCS based on the SIR (Signal to Interference Ratio) value, which is a channel quality estimation value, and controls rate matching section 103 and modulation section 105. MCS control section 102 will be described in detail later.

Rate matching section 103 performs rate matching processing on the signal output from turbo coder 101 so that the signal has the MCS determined by MCS control section 102, and outputs the signal after rate matching processing to interleaver 104. Interleaver 104 rearranges (interleaves) the arrangement of the signal output from rate matching section 103 in accordance with a predetermined pattern and outputs the interleaved signal to modulation section 105. Turbo coder 101 and rate matching section 103 function as a coding section.

Modulation section 105 modulates the signal output from interleaver 104 using one of QPSK, 8PSK, 16QAM and 64QAM, in accordance with control of MCS control section 102, and outputs the modulated signal to transmission processing section 106. Transmission processing section 106 performs predetermined transmission processing to the signal output from modulation section 105 and outputs the signal to a communicating party via antenna 107.

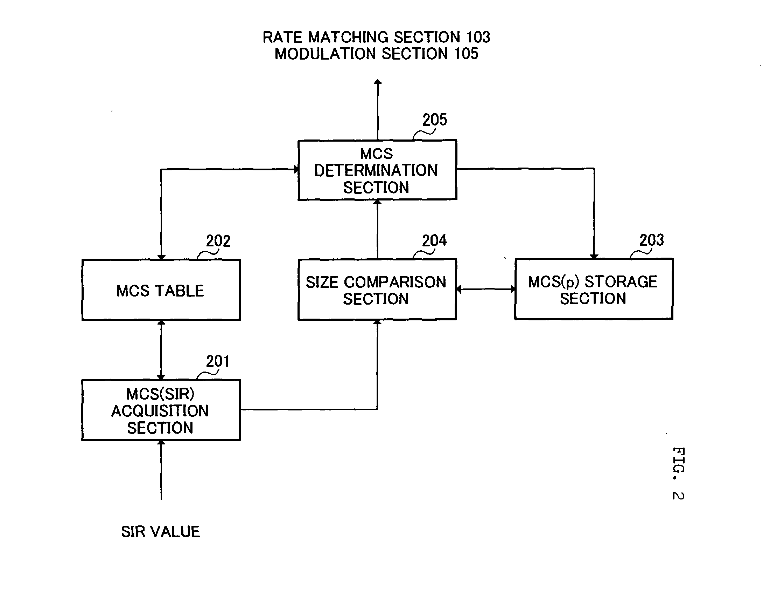

FIG.2 is a block diagram showing the internal configuration of MCS control section 102 according to Embodiment 1 of the present invention. In this figure, MCS (SIR) acquisition section 201 acquires from MCS table 202 an MCS level corresponding to the SIR value reported from the communicating party. This MCS level is made a tentative MCS level (MCS (SIR)) and the MCS (SIR) is output to comparison section 204.

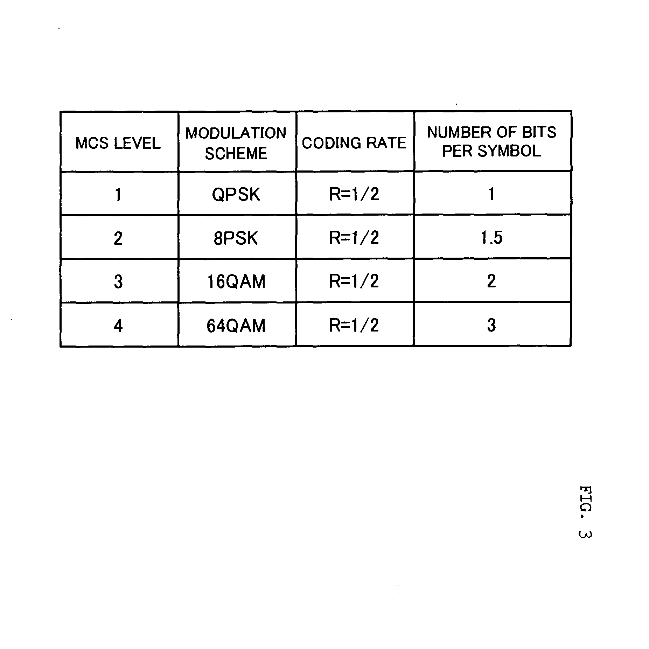

MCS table 202 holds a table combining modulation schemes and coding rates. FIG.3 shows a specific example of the table. FIG.3 shows the MCS table according to Embodiment 1 . As shown in this figure, modulation schemes, coding rates and furthermore MCS levels are assigned correspondence with each other. Specifically, to express MCS levels in the form of (modulation scheme, coding rate), correspondence is assigned such that MCS level 1 = (QPSK, 1/2), MCS level 2 = (8PSK, 1/2), MCS level 3 = (16QAM, 1/2) and MCS level 4 = (64QAM, 1/2). For reference, the number of bits per symbol in each MCS level is "1", "1.5","2" and "3," for MCS levels 1 to 4.

MCS(p) storage section 203 stores the MCS level (MCS (p)) used in previous control and outputs this MCS level to comparison section 204.

Comparison section 204 compares the MCS(SIR) output from MCS(SIR) acquisition section 201 with the MCS (p) output fromMCS (p) storage section 203, and outputs the comparison result to MCS determination section 205.

MCS determination section 205 determines the MCS level that stays within a predetermined fluctuation range with respect to the MCS (p) based on the comparison result output from comparison section 204, detects the modulation scheme and coding rate corresponding to the determined MCS level from MCS table 202, and controls rate matching section 103 and modulation section 105. MCS determination section 205 outputs the determined MCS level to MCS (p) storage section 203, and MCS (p) storage section 203 updates the stored MCS (p) with the newly determined MCS level.

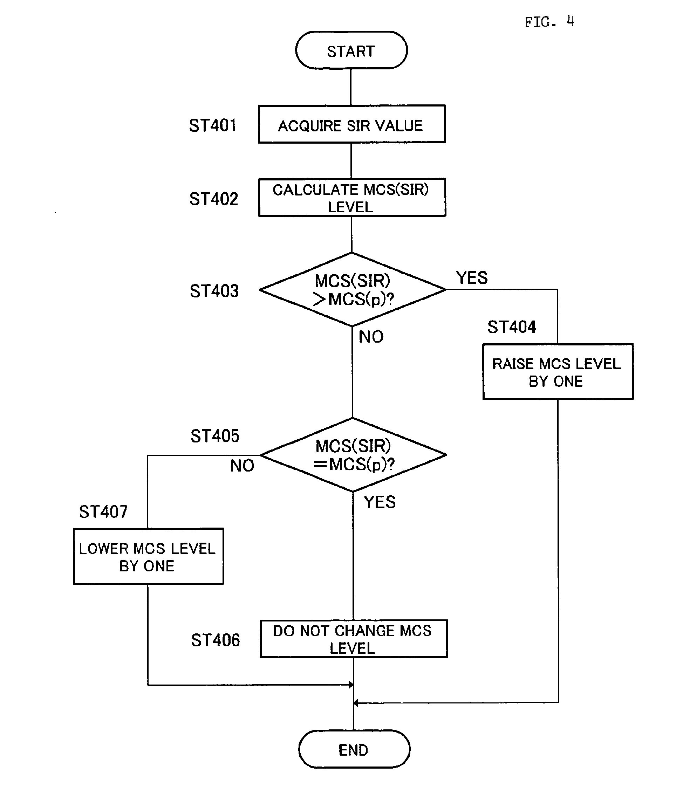

Next, the MCS determination method of MCS control section 102 will be explained. FIG.4 is a flow chart of MCS determination steps. In this figure, in step (hereinafter shortened to "ST") 401, MCS (SIR) acquisition section 201 acquires the SIR value determined by the communicating party. In ST402, threshold value determination is performed between the acquired SIR value and predetermined threshold values S1, S2 and S3 (S1<S2<S3), and the MCS level (MCS (SIR)) is determined. Specifically, when MCS(SIR) acquisition section 201 acquires an SIR value equal to or less than threshold value S1, MCS (SIR) = 1, and when the acquired SIR value is larger than threshold value S1 and equal to or less than threshold value S2, MCS (SIR) = 2. In addition, when the SIR value is larger than threshold value S2 and equal to or less than threshold value S3, MCS(SIR) = 3, and, when the SIR value is larger than threshold value S3, MCS(SIR) = 4.

In ST403, comparison section 204 determines whether or not the MCS (SIR) determined in ST402 exceeds the MCS level (MCS (p)) used in previous MCS control, and, when the MCS(SIR) exceeds the MCS level (MCS(p)) used in previous MCS control, a shift is made to ST404. In ST404, MCS determination section 205 increases the MCS level used in MCS control of this time one level higher than the MCS (p), and concludes the MCS determination steps. When the MCS(SIR) does not exceed the MCS(p), a shift is made to ST405.

In ST405, comparison section 204 determines whether or not the MCS (SIR) is equal to the MCS (p), and, when MCS (SIR) is equal to MCS (p), a shift is made to ST406. In ST406, MCS determination section 205 makes the MCS level used in MCS control of this time the same as the MCS (p), and concludes the MCS determination steps. When the MCS(SIR) is not equal to MCS(p), that is, when the MCS (SIR) is smaller than the MCS(p), a shift is made to ST407. In ST407, MCS determination section 205 lowers the MCS level used in MCS control of this time one level lower than the MCS (p), and concludes the MCS determination steps.

As described above, to determine an MCS, the MCS level is determined such that the fluctuation range (level difference) between an MCS level (MCS (SIR)) tentatively determined based on the SIR value reported from the communicating party and a previously used MCS level (MCS(p)) is within 1, thereby reducing the fluctuation of MCS level, so that, even when accuracy of channel quality estimation is low and variation of the SIR value is large, variation of actual channel quality is mostly small, and, consequently, an MCS is determined that is in accordance with actual channel quality and, as a result, throughput can be improved.

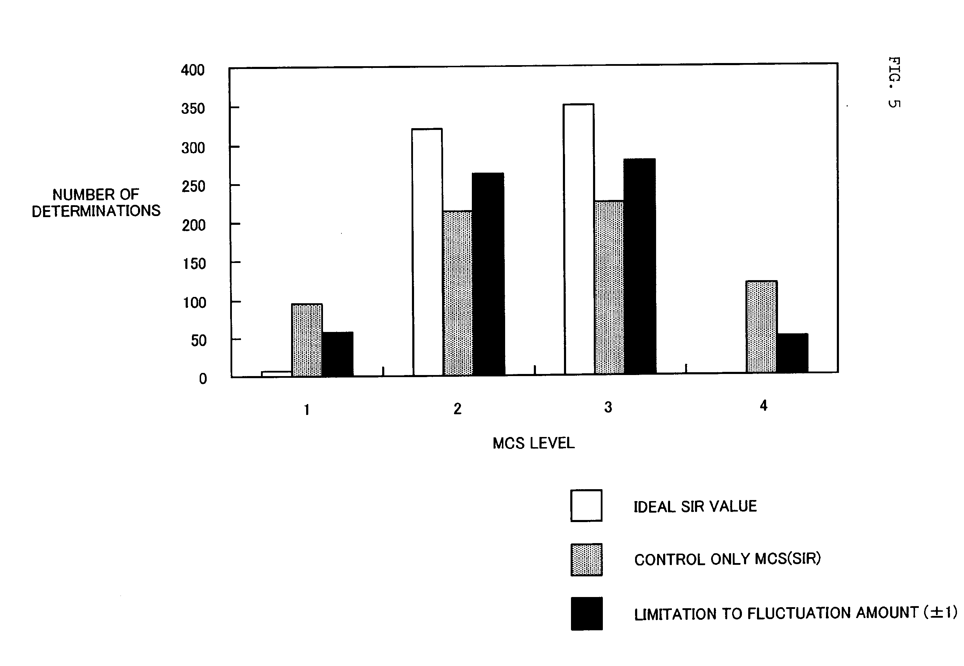

FIG.5 shows simulation results derived from the above-described MCS determination method. In FIG.5, the horizontal axis is the MCS level, and the vertical axis is the number of times each MCS level is determined. The outline graph shows a case where MCS determination is performed using the ideal SIR value and the half-tone graph shows a case (conventional method) when MCS determination is performed using only MCS (SIR). Further, the black graph shows a case where fluctuation range is given a limitation, that is, a case where the difference between the MCS currently used and an MCS used previously is limited within 1.

Here, referring to the case of MCS level 2, for example, the number of times MCS level 2 is determined with respect to the ideal SIR value is about 300 times, the number of times MCS level 2 is determined according to the conventional method is about 200 times, and the difference, 100 times, is determination errors. In contrast, when the fluctuation range is given a limitation, the number of times MCS level 2 is determined is about 250 times, reducing the number of determination errors to 50 times. The same applies to other MCS levels. That is, it is possible to reduce the number of determination errors to half by providing limitation to the fluctuation range.

As described above, according to the present embodiment, even when accuracy of channel quality estimation is low and variation of channel quality estimation values is large, the fluctuation of actual channel quality is assumed to be small and the fluctuation range of MCS levels is made within a predetermined number, so that it is possible to take channel quality into consideration and yet not reflect its influence entirely and reduce fluctuation of channel quality, and, as a result, MCS' s are used in accordance with actual channel quality and throughput can be improved. In addition, the MCS level is determined fast so that control delay can be reduced.

Although a case has been described above with this embodiment where MCS levels are provided in four stages and the fluctuation range of MCS levels is limited within 1, the present invention is by no means limited to this, and arbitrary configurations can be employed.

In addition, when the fluctuation range of MCS levels is limited within 2,3,..., and so forth, if the level difference between an MCS(SIR) and MCS(p) stays within a limited value, the MCS(SIR) is determined the level to be used this time.

### (Embodiment 2)

Although a case has been described above with Embodiment 1 where fluctuation of channel quality is assumed to be small and the level difference between an MCS(SIR) and MCS(p) is limited within a predetermined fluctuation range, a case will be now with this embodiment where fluctuation of channel quality is substantial due to the influence of fading.

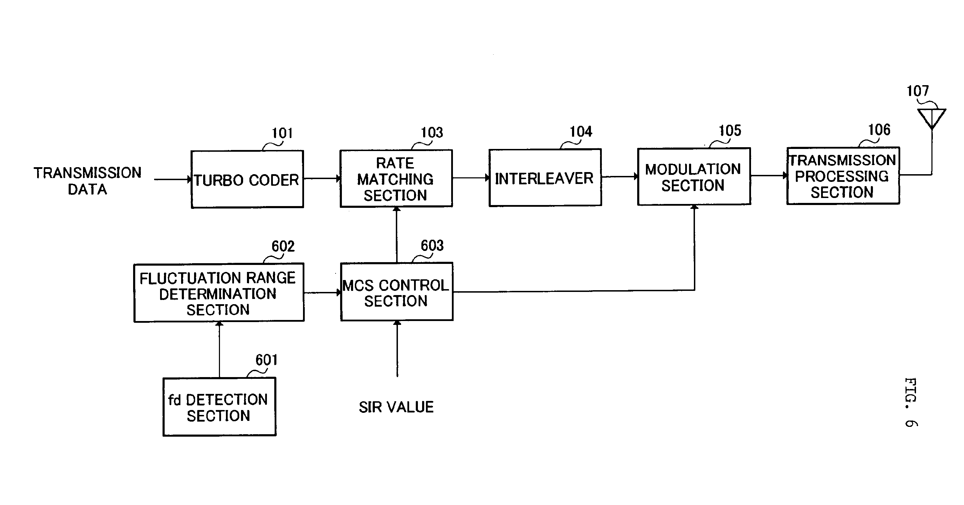

FIG. 6 is a block diagram showing the configuration of the transmission apparatus according to Embodiment 2 of the present invention. Parts in FIG.6 that are identical with those with FIG.1 are assigned the same reference numerals as in FIG.1 and detailed explanation thereof will be omitted.

fd detection section 601 detects Doppler frequency (fd) and reports the detected fd to fluctuation range determination section 602.

Fluctuation range determination section 602 determines an MCS fluctuation range based on the fd reported from fd detection section 601, and reports the determined fluctuation range to MCS control section 603. Specifically, when fd is small, fluctuation range is made small, and, when fd is large, fluctuation range is made large. This is because small fd means that fading is slow and fluctuation of channel quality is moderate, and large fd means that fading is fast and fluctuation of channel quality is sharp.

MCS control section 603 compares an MCS level (MCS (SIR)) tentatively determined from an SIR value with the size of theMCS level (MCS (p)) used in previous control, and, based on the comparison result, determines an MCS by increasing or reducing MCS (P) by the fluctuation range reported from fluctuation range determination section 602.

Asdescribedabove, according to this embodiment, an MCS fluctuation range corresponding to Doppler frequency is determined, and the MCS level used in previous control is increased or reduced by this fluctuation range, thereby making it possible to follow the fluctuation range of channel quality and improve throughput even when the fluctuation of channel quality is substantial due to the influence of fading.

Although a case has been described above with the embodiments where the SIR value is used as channel quality, the present invention is by no means limited to this, and any index can be used that indicates channel quality, such as SNR (Signal to Noise Ratio) andCQI (Channel Quality Indicator).

A first aspect of the present invention is a radio communication apparatus that has: a coding section that codes transmission data at a changeable coding rate; a modulation section that performs modulation using one of a plurality of modulation schemes; and a control section that tentatively determines an MCS level in accordance with channel quality, compares the tentatively determined MCS level with an MCS level used in previous control, determines the tentatively determined MCS level when a level difference is within the predetermined fluctuation range, or determines anMCS level having a level difference with respect to the MCS level used in previous control limited within the fluctuation range when the level difference exceeds the fluctuation range, and controls the coding section and the modulation section so as to have the determined MCS level.

According to this configuration, when the level difference between a tentatively determined MCS level and the MCS level used in previous control is within a predetermined fluctuation range, the tentatively determined MCS level is determined, and, when the level difference exceeds the predetermined fluctuation range, an MCS level is determined having a level difference with respect to the MCS level used in previous control limited within the predetermined fluctuation range. Consequently, it is possible to reduce the fluctuation of MCS levels, and, even when accuracy of channel quality estimation is low and variation of channel quality estimation level is large, MCS' s are used in accordance with actual channel quality and throughput can be improved. In addition, the MCS level is determined fast so that control delay can be reduced.

In a second aspect of the present invention, the radio communication apparatus of the above-described aspect has: a detection section that detects a Doppler frequency; and a determination section that determines the fluctuation range with respect to the MCS level used in previous control according to the detected Doppler frequency, and the control section of the radio communication apparatus determines the MCS level by the determined fluctuation range.

According to this configuration, the MCS level is determined by the fluctuation range corresponding to the Doppler frequency, so that, even when fluctuation of channel quality is substantial due to the influence of fading, it is possible to follow fluctuation of channel quality and improve throughput.

In a third aspect of the present invention, in the radio communication apparatus of the above-described aspect, the detection section makes the fluctuation range large when the Doppler frequency is high, and makes the fluctuation range small when the Doppler frequency is low.

According to this configuration, provided that fading is fast when Doppler frequency is high, it is possible to follow fluctuation of channel quality by making the fluctuation range of MCS levels large. Likewise, provided that fading is slow when Doppler frequency is low, it is possible to improve throughput by making the fluctuation range of MCS levels small, even when accuracy of channel quality estimation is low.

A fourth aspect of the present invention is an MCS determination method in which an MCS level is tentatively determined in accordance with channel quality, the tentatively determined MCS level is compared with an MCS level used in previous control, and the tentatively determined MCS level is determined when the level difference is within the predetermined fluctuation range, and an MCS level having a level difference with respect to the MCS level used in previous control limited within the fluctuation range is determined when the level difference exceeds the fluctuation range.

According to this method, when the level difference between the tentatively determined MCS level and the MCS level used in previous control is within the predetermined fluctuation range, the tentatively determined MCS is determined, and, when the level difference exceeds the predetermined fluctuation range, an MCS level is determined having a level difference with respect to the MCS level used in previous control limited within the fluctuation range, so that fluctuation of MCS levels can be reduced, and consequently, even when accuracy of channel quality estimation is low and variation of channel quality estimation values is large, MCS' s are used in accordance with actual channel quality and throughput can be improved. In addition, the MCS level is determined fast so that control delay can be reduced.

The present application is based on Japanese Patent Application No.2003-378552, filed on November 7, 2003, the entire content of which is expressly incorporated by reference herein.

### Industrial Applicability

The radio communication apparatus and MCS control method of the present invention determine an MCS so that the level difference between the MCS level in previous control and the MCS level in current control is within a predetermined fluctuation range, thereby providing an advantage of improving throughput, and are applicable to radio communication apparatus performing AMC control.

## Claims

1. A radio communication apparatus comprising:
a coding section that codes transmission data at a changeable coding rate;
a modulation section that performs modulation using one of a plurality of modulation schemes; and
a control section that tentatively determines an MCS level in accordance with channel quality, compares the tentatively determined MCS level with an MCS level used in previous control, determines the tentatively determined MCS level when a level difference is within the predetermined fluctuation range or determines an MCS level having a level difference with respect to the MCS level used in previous control limited within the fluctuation range when the level difference exceeds the fluctuation range, and controls the coding section and the modulation section so as to have the determined MCS level.

2. Theradiocommunicationapparatusaccordingtoclaim 1, comprising:
a detection section that detects a Doppler frequency; and
a determination section that determines the fluctuation range with respect to the MCS level used in previous control according to the detected Doppler frequency,
wherein the control section determines the MCS level by the determined fluctuation range.

3. Theradiocommunicationapparatusaccordingtoclaim 2, wherein the determination section makes the fluctuation range large when the Doppler frequency is high, and makes the fluctuation range small when the Doppler frequency is low.

4. An MCS determination method comprising:
tentatively determining an MCS level in accordance with channel quality;
comparing the tentatively determined MCS level with an MCS level used in previous control; and
determining the tentatively determined MCS level when a level difference is within the predetermined fluctuation range or determining an MCS level having a level difference with respect to the MCS level used in previous control limited within the fluctuation range when the level difference exceeds the fluctuation range.
